# EUROPÄISCHE PATENTSCHRIFT

(11) **EP 1 046 486 B1**
(45) Veröffentlichungstag und Bekanntmachung des Hinweises auf die Patenterteilung: **28.05.2003**
(21) Anmeldenummer: 00107429.3
(22) Anmeldetag: 06.04.2000
(51) Int. Cl.: B29C 45/16

(54) **Formwerkzeug zur Herstellung von mehreren montagegespritzten Bauteilen**
Mould tool for producing a plurality of parts mounted by injection moulding
Outil de moulage pour fabriquer plusieurs pièces montées par moulage par injection

(30) Priorität: 24.04.1999 DE 19918776
(43) Veröffentlichungstag der Anmeldung: 25.10.2000
(73) Patentinhaber: FILTERWERK MANN + HUMMEL GmbH, 71631 Ludwigsburg (DE)
(72) Erfinder: Neuschwander, Helmut, 71636 Ludwigsburg (DE)
(74) Vertreter: Voth, Gerhard, Dipl.-Ing.

(56) Entgegenhaltungen:
- EP-A- 0 482 272
- FR-A- 2 687 601
- US-A- 5 715 782

## Beschreibung

### Stand der Technik

Die Erfindung betrifft ein Formwerkzeug zur Herstellung von mehreren montagegespritzten Bauteilen mit mehreren Formnestem nach der Gattung des Patentanspruches 1. Außerdem betrifft die Erfindung ein Verfahren zur gleichzeitigen Herstellung mehrerer montagegespritzter Bauteile mit einem Formwerkzeug gemäß dem Anspruch 7.

Die Herstellung von montagegespritzten Bauteilen ist hinlänglich bekannt und wird z. B. in der DE 33 40 122, Spalte 2, ab Zeile 15 beschrieben. Durch entsprechende Gestaltung einzelner Formteile des Formwerkzeugs können verschiedene Formgeometrien erzeugt werden, die das schrittweise Spritzgießen von Einzelkomponenten des zu fertigenden montagegespritzten Bauteils erlauben. Dabei bilden die jeweils zuvor gefertigten Komponenten immer einen Teil der neuen Formgeometrie. Auf diese Weise sind die einzelnen Komponenten des montagegespritzten Bauteils miteinander verbunden. Bei entsprechender Wahl der insbesondere aus Kunststoff bestehenden Materialien ist es auch möglich, nicht aneinanderhaftende, also bewegliche Teile, zu spritzen. Es können jedoch auch Materialien verwendet werden die aneinander haften, z. B. zur Erzeugung von Dichträndern.

Aus der EP 482 272 B1 ist ein Verfahren zur Herstellung von montagespritzten Schaltklappen bekannt. Dabei wird die Schaltklappe und die Welle der Schaltklappe einteilig in den zugehörigen Klappenrahmen montagegespritzt (vergleiche Figur 5). Bei der Herstellung des Klappenrahmens müssen Kerneinsätze 3, 4 in der Form für die Schaltklappe vorgesehen werden, die das Volumen der Klappenwelle ausfüllen.

Diese müssen zur Erzeugung der Schaltklappen- Wellenkomponente aus der Spritzgußform herausgezogen werden, wobei hierzu um die Form herum ein Aktionsraum für die Kerneinsätze 3, 4 vorgesehen werden muß.

Gemäß der EP 747 587 A1 wird vorgeschlagen, montagegespritzte Bauteile mit zusätzlichen Einlegeteilen zu versehen, die in die Spritzgießform eingebracht werden (vergleiche Figur 4, Bauteil 22). Diese Einlegeteile können die Funktionseigenschaften der montagespritzten gegossenen Bauteile verbessern, z. B. für eine einwandfreie Lagerung beweglicher Teile sorgen oder Schwindungsprozesse der Spritzgußkomponenten ausgleichen.

Die Komplexität der montagegespritzten Bauteile stößt jedoch an ihre Grenzen, da bei deren Gestaltung die mit den Formteilen des Formwerkzeuges verwirklichbaren Geometrien beachtet werden müssen. Wird ein Bauteil zu komplex, um es in einem Formwerkzeug herzustellen, können im Formwerkzeug auch mehrere Formnester vorgesehen werden, die unterschiedliche Geometrien aufweisen. Das zu fertigende Bauteil muß dann von einem in das nächste Formnest transportiert werden. Dies bedeutet allerdings einen höheren Handhabungsaufwand, wodurch die Vorteile des Montagespritzgießens teilweise wieder aufgehoben werden. Außerdem müssen Abstriche an die Toleranzen des zu fertigenden Bauteils gemacht werden. eine andere Möglichkeit besteht darin, mehrere montagegespritzte Bauteile geringerer Komplexität zu eine Baugruppe zusammenzufügen, die die gestellten Anforderungen an die Komplexität erfüllt. Dies würde jedoch nur eine teilweise Umsetzung der mit dem Montagespritzgießen verbundenen Idee bedeuten, durch urformende Erzeugung von Fertigteilen Montageaufwand einzusparen. Damit wäre die Wirtschaftlichkeit solcher Baugruppen wieder eingeschränkt.

Aufgabe der Erfindung ist daher, ein Formwerkzeug zu schaffen, mit dessen Hilfe die Fertigung komplexer montagegespritzter Bauteilstrukturen möglich ist.

Diese Aufgabe wird durch die Merkmale des Anspruches 1 gelöst. Femer wird gemäß Anspruch 7 ein Verfahren beansprucht, welches sich die beschriebene Vorrichtung zunutze macht.

### Vorteile der Erfindung

Nach der Erfindung wird ein Formwerkzeug vorgeschlagen, welches mehrere Formnester zur Erzeugung von montagegespritzten Bauteilen aufweist. Dieses ist dadurch gekennzeichnet, daß bei der Verwirklichung mindestens einer Formgeometrie durch die Formnester Aufnahmen geschaffen werden, in die ein die zu fertigenden Bauteile verbindendes Einlegeteil eingesetzt werden kann. Dieses wird anschließend im nächsten Schritt des Montagespritzgießvorganges umspritzt, wodurch ein fester Verband aus montagegespritzten Bauteilen entsteht. Dieser Verband fällt also als Einheit aus dem Formwerkzeug und kann ohne Montageaufwand für die einzelnen Bauteile seiner Verwendung zugeführt werden. Hierdurch steigt die Wirtschaftlichkeit des montagegespritzten Bauteilverbandes. Dabei kann dieser eine komplexe Struktur aufweisen, die bei Verwendung von einem Formnest im Formwerkzeug nicht mehr zu verwirklichen wäre.

Es ist dabei unerheblich, ob sich die montagegespritzten Komponenten der Bauteile relativ zueinander bewegen lassen (z. B. Schaltelement) oder ob sie fest miteinander verbunden sind (z. B. angespritzte Dichtung). Die Aufnahme des Einlegeteils kann aus verschiedenen Formteilen der Formnester gebildet werden oder auch durch bereits montagegespritzte Bauteilkomponenten. Sowohl die Bauteilkomponenten als auch die Formteile können die zur Erzeugung neuer Bauteilkomponenten notwendige Formgeometrie erzeugen.

Gemäß einer besonderen Ausgestaltung des Erfindungsgedankens sind die Aufnahmen für das Einlegeteil derart ausgebildet, daß diese auf einer Achse liegen. Das Einlegeteil kann dann entlang dieser Achse in die Aufnahmen eingesetzt werden. Das Einlegeteil kann entsprechend einer sinnvollen Ausgestaltung dieser Variante aus einem strangförmigen Einlegeteil bestehen. Das kann z. B. eine Betätigungswelle für Schaltkomponenten der einzelnen Bauteile sein. Die Aufnahmen bestehen dann aus Löchern, in die das strangförmige Einlegeteil eingeschoben wird. Dies hat den Vorteil, daß die Aufnahmen durch Entfernung einfacher Formteile, die stiftförmig ausgebildet sind, im entsprechenden Fertigungsschritt des Montagespritzgießprozesses erzeugt werden können.

Eine weitaus höhere Flexibilität in der geometrischen Ausgestaltung des Bauteilverbandes kann erreicht werden, wenn die einzelnen Formnester drehbar im Formwerkzeug angeordnet sind. Dies hat den Vorteil, daß vor der Einbringung des Einlegeteils die Formnester entsprechend einer günstigen Zugänglichkeit für die Einspeisung des Spritzgießmaterials sowie für die zu erzeugenden Relativbewegung zwischen den Formteilen in die jeweils günstigste Stellung gebracht werden können.

Eine günstige Ausführungsform des erfindungsgemäßen Formwerkzeuges ergibt sich, wenn mit dem Formwerkzeug gleichzeitig mehrere Baugruppen hergestellt werden können. Das Formwerkzeug kann z. B. karusselförmig ausgebildet sein, wobei sich die jeweils zu einer Baugruppe gehörenden Formnester unter den Handhabungsmaschinen des jeweiligen Fertigungsschrittes hinwegdrehen. Es ist auf diese Weise ein getakteter Produktionsablauf zu erzeugen, wobei die Handhabungsmaschinen aller Fertigungsschritte in jedem Takt zur Verwendung kommen. Der Effekt ist eine optimale Ausnutzung des durch die Gesamtvorrichtung gegebenen Fertigungspotentials.

Eine zweckmäßige Ausbildung der Erfindung wird erreicht, wenn das Formwerkzeug Formnester zur Erzeugung von montagegespritzten Schaltklappen aufweist. Diese können z. B. gemäß dem in der EP 482 272 B1 gemachten Vorschlag gestaltet sein. Als Einlegeteil kommt dann eine die Schaltklappen verbindende Welle zum Einsatz, die zur gleichzeitigen Betätigung aller Schaltklappen geeignet ist. Die Aufnahmen für die Welle werden durch Kerneinsätze gebildet, die seitlich in die Formnester eingesteckt sind und vor dem Eingießen der Welle entfernt werden müssen. Hierzu ist in axialer Richtung bezogen auf die Welle ein gewisser Betätigungsfreiraum für die Kerneinsätze notwendig. Für den Fall, daß dieser aufgrund des geforderten Abstandes zwischen den Schalklappen nicht gegeben ist, können verdrehbare Formnester zur Anwendung kommen. Es bietet sich an, die Klappenrahmen in einer Stellung der Formnester zu fertigen, in der die Ausrichtung der in den Klappenrahmen befindlichen Löcher 90° zur Ausrichtung der gemeinsamen Klappenwelle beträgt. In dieser Stellung können die stiftförmigen Formteile ohne großen Aufwand aus den zugehörigen Aufnahmen ausgeführt werden und sogar aufgrund der identischen Aushebebewegung an allen Formnestern auf einem Handhabungsgerät zusammengefaßt werden. Anschließend können die Formnester um 90° gedreht werden, so daß die Welle in die Aufnahmen der einzelnen Schaltklappen eingeführt werden kann.

Das Einlegeteil kann z. B. aus einer Stahlwelle bestehen. Diese wird in die hierfür vorgesehenen Durchgänge in den Klappenrahmen hindurchgesteckt, wobei die Klappenrahmen bereits weitgehend erkaltet sind. Daher hat eine evtl. Bauteilschwindung bereits stattgefunden, so daß die Welle in ihren Abmessungen derart gewählt werden kann, daß das Lagerspiel klein ist. Das anschließende Umspritzen der Welle mit den Schaltklappen sorgt für eine drehsteife Verbindung, so daß die Welle zur Betätigung der Schaltklappen verwendet werden kann.

Ein Verfahren zur Herstellung der beschriebenen Bauteilverbände mit Hilfe des erfindungsgemäßen Formwerkzeuges ist in den Ansprüchen 7 und 8 beschrieben.

Diese und weitere Merkmale von bevorzugten Weiterbildungen der Erfindung gehen außer aus den Ansprüchen auch aus der Beschreibung und den Zeichnungen hervor, wobei die einzelnen Merkmale jeweils für sich allein oder zu mehreren in Form von Unterkombinationen bei der Ausführungsform der Erfindung und auf anderen Gebieten verwirklicht sein und vorteilhafte sowie für sich schutzfähige Ausführungen darstellen können, für die hier Schutz beansprucht wird.

Ein Ausführungsbeispiel der Erfindung wird nachfolgend anhand der Zeichnungen erläutert. Hierbei zeigen
- Figur 1: ein Formwerkzeug mit geöffneten Formnestern zur Herstellung von Schaltklappenverbänden als Aufsicht,
- Figur 2a: den Klappenrahmen der gefertigten Schaltklappen gemäß dem Schnitt A-A in Figur 1
- Figur 2b: den Schnitt durch eine Schaltklappe des Schaltklappenverbandes gemäß dem Schnitt B-B in Figur 1 und
- Figur 3: einen Längsschnitt durch den Schaltklappenverband entlang der Betätigungswelle.

### Beschreibung der Ausführungsbeispiele

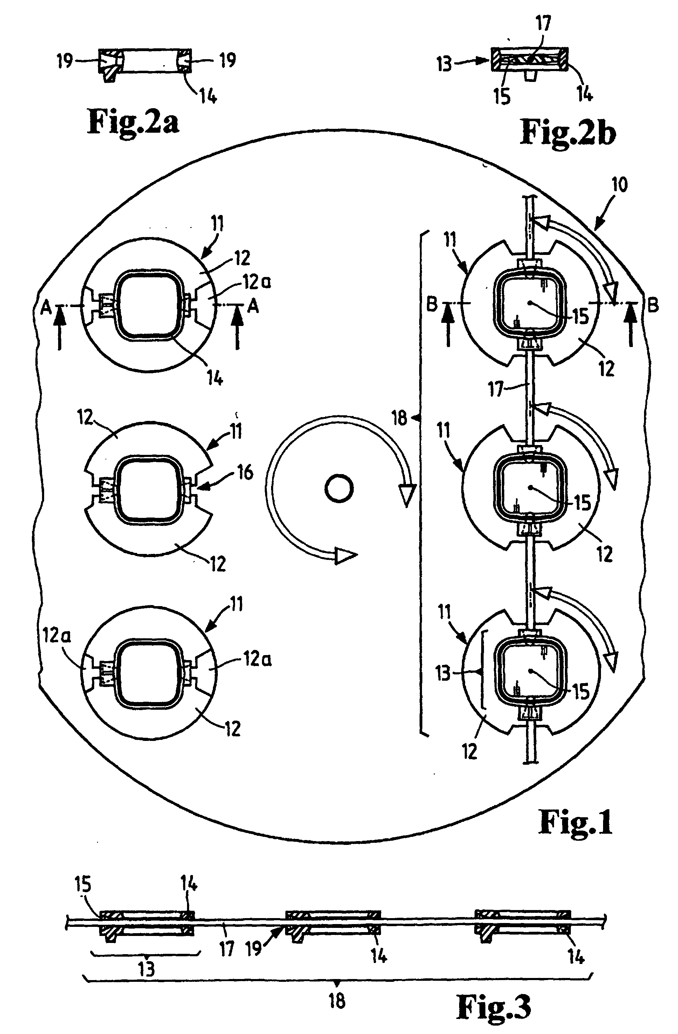

In Figur 1 ist ein als Karussell 10 ausgeführtes Formwerkzeug schematisch als Aufsicht dargestellt. Dieses Karussell weist Formnester 11 auf, die aus einzelnen Formteilen 12, 12a bestehen. Jedes Formnest ist für die gießtechnische Erzeugung eines Bauteils 13 verantwortlich, wobei die Bauteile im Ausführungsbeispiel jeweils aus einem Klappenrahmen 14 und einer Schaltklappe 15 bestehen. In den Formnestern 11 sind weiterhin Aufnahmen 16 vorgesehen, die durch die Formteile 12a verschlossen werden. Dies ist bei dem oberen und dem unteren Formnest der linken Reihe gemäß Figur 1 zu erkennen. Die Formnester sind ohne das jeweilige Formoberteil dargestellt, so daß man die im ersten Fertigungsschritt hergestellten Klappenrahmen 14 erkennen kann.

Im mittleren Formnest der linken Reihe sind die schematisch dargestellten Formteile 12a bereits entfernt. Es wird die Aufnahme 16 für ein wellenförmiges Einlegeteil 17 freigegeben, welches nach Drehung der Formnester um 90° und Drehung des Karussells um 180° (durch Doppelpfeile angegeben) in die Formnester eingeschoben wird und auf diese Weise eine Baugruppe 18 bilden. Die unlösbare Verbindung der Bauteile 13 zur Baugruppe 18 erfolgt durch Umspritzen des Einlegeteils 17 mit den Schaltklappen 15.

In Figur 2a ist der Klappenrahmen 14, wie er im ersten Fertigungsschritt erzeugt wird, im Schnitt dargestellt. Dieser ist einteilig ausgeführt und weist Lagerstellen 19 für das wellenförmige Einlegeteil auf, die gleichzeitig einen Teil der Aufnahme 16 (vergleiche Figur 1) für das Einlegeteil bilden. Werden diese im Durchmesser größer als in der dargestellten Weise gewählt, so dienen sie nicht als Aufnahme 16 sondern erzeugen zwischen Einlegeteil 17 und Klappenrahmen einen Hohlraum, der ebenfalls durch das Schaltklappenmaterial ausgefüllt wird, sobald diese im zweiten Fertigungsschritt erzeugt wird. Dies kann lagertechnische Vorteile haben.

In Figur 2b ist das fertig gespritzte Bauteil 13 dargestellt. Es besteht aus der Schaltklappe 15 und dem Klappenrahmen 14. Weiterhin ist das Einlegeteil 17 zu erkennen.

Die fertiggestellt Baugruppe 18 ist in Figur 3 zu erkennen. Sie besteht gemäß dem Ausführungsbeispiel aus drei montagegespritzten Bauteilen 13, die einen Schaltklappenbverband bilden. Zu erkennen sind auch die Lagerstellen 19, wobei hier der Klappenrahmen teilweise direkt mit dem Einlegeteil 17 in der Verbindung steht und teilweise über einen kegligen angespritzten Fortsatz der Schaltklappe 15.

### Bezugszeichenliste

- 10: Karussell
- 11: Formnest
- 12: Formteil
- 12a: Formteil
- 13: Bauteil
- 14: Klappenrahmen
- 15: Schaltklappe
- 16: Aufnahme
- 17: Einlegeteil
- 18: Baugruppe
- 19: Lagerstelle

## Patentansprüche

1. Formwerkzeug zur Herstellung von mehreren montagegespritzten Bauteilen (13), wobei für die einzelnen Bauteile jeweils ein Formnest (11) vorgesehen ist, welches Formteile (12, 12a) zur Bildung von zu unterschiedlichen Fertigungszuständen der Bauteile (13) gehörenden Formgeometrien aufweist, wobei durch mindestens eine Formgeometrie der Formnester (11) Aufnahmen (16) für ein die Bauteile (13) zu einer Baugruppe (18) verbindendes Einlegeteil (17) gebildet ist, wobei die Formnester (11) drehbar auf diesem montiert sind.

2. Formwerkzeug, nach Anspruch 1, wobei die Aufnahmen (16) für das Einlegeteil (17) auf einer Achse liegen und so ausgebildet sind, dass das Einlegeteil entlang dieser Achse in die Aufnahme einsetzbar ist.

3. Formwerkzeug nach Anspruch 2, wobei die Aufnahmen (16) aus Löchern bestehen, in die ein stangenförmiges Einlegeteil (17) einschiebbar ist.

4. Formwerkzeug nach einem der vorangehenden Ansprüche, wobei dieses genügend Formnester (11) zur gleichzeitigen Herstellung von mindestens zwei Baugruppen aufweist, und selbst drehbar gelagert ist.

5. Formwerkzeug nach einem der vorangehenden Ansprüche wobei die Formteile (12, 12a) der Formnester (11) je einen Klappenrahmen (14) und der Klappenrahmen (14) zusammen mit den Formteilen je eine Schaltklappe (15) abbilden, wobei die Aufnahmen (16) für das insbesondere wellenförmige Einlegeteil (17) in einem Teil der Formteile vorgesehen ist, derart, dass das Einlegeteil die für die Abbildung der Schaltklappe vorgesehenen Formgeometrie durchdringt.

6. Verfahren zur gleichzeitigen Herstellung mehrerer montagegespritzter Bauteile (13) mit einem Formwerkzeug gemäß einem auf Anspruch 3 rückbezogenen Anspruch, wobei folgende Schritte durchlaufen werden:
- Zusammenfügen von Formteilen (12, 12a) zu einer Formgeometrie,
- Ausspritzen der gebildeten Formgeometrie mit einem Füllmaterial, insbesondere Kunststoff,
- Füllmaterial zumindest weitgehend erstarren lassen,
- mindestens einmalige Wiederholung der bisher angeführten Schritte zur Bildung weiterer Bauteilkomponenten (14, 15), wobei die Formgeometrie verändert wird und die Bauteilkomponenten einen Teil der jeweils neuen Formgeometrie bilden, wobei vor der Bildung zumindest einer der Bauteilkomponenten der einzelnen Bauteile (13) ein Einlegeteil (17) in Aufnahmen (16) der Formgeometrien eingelegt wird, so dass mindestens zwei der Bauteile durch Umspritzen des Einlegeteils mit der neuen Bauteilkomponente miteinander verbunden werden,
- wobei mindestens eine Bauteilkomponente (14, 15) pro Formnest gespritzt wird,
- die einen Verschluss der lochförmigen Aufnahmen (16) bildenden Formteile (12a) nach außen entfernt werden,
- die Formnester gedreht werden, bis die Aufnahmen (16) auf einer Achse liegen,
- das stangenförmige Einlegeteil (17) entlang der gemeinsamen Achse in die Aufnahmen geschoben wird,
- das Einlegeteil mit einer neuen Bauteilkomponente umspritzt wird.

## Claims

1. Mould tool for producing a plurality of parts (13) mounted by injection moulding, a mould cavity (11) being provided for the different parts , which mould cavity features mouldings (12, 12a) for realising mould geometries associated to different manufacturing states of the parts (13); forming by at least one mould geometry of the mould cavities (11) receptacles (16) for an insert (17) connecting the parts (13) to an assembly (18), the mould cavities (11) being mounted rotatable on the said insertion part.

2. Mould tool according to claim 1, the receptacles (16) for the insert (17) being situated on an axis and are formed in a manner that the insert can be inserted into the receptacle along this axis.

3. Mould tool according to claim 2, the receptacles (16) being composed of holes in which an insert (17) having the form of a rod can be inserted.

4. Mould tool according to one of the preceding claims, featuring enough mould cavities (11) for manufacturing simultaneously at least two assemblies and which can be rotated .

5. Mould tool according to one of the preceding claims, the mouldings (12, 12a) of the mould cavity reproduce one flap frame (14) respectively and the flap frame (14) reproduce together with the mouldings one flap (15) respectively, the receptacles (16) being provided in a portion of the mouldings for the, in particular undulated insert (17) in a manner that the insert transverses the mould geometry provided for the reproduction of the flap.

6. Method for simultaneously producing a plurality of parts (13) mounted by injection moulding with a mould tool according to a claim referred back to claim 3, following steps being executed :
- assembling of mouldings (12, 12a) for a mould geometry,
- injection of a filling material, in particular plastics, into realised mould geometry,
- solidifying at least widely the filling material,
- Repeat at least once the above indicated steps for realising other part components (14, 15) the mould geometry being modified and the part components forming a portion of the respective new mould geometry, before realising at least one of the part components of the individual parts (13) one insert (17) is inserted into receptacles (16) of the mould geometries , so that at least two of the parts are linked to each other in injecting the insert with the new part component,
- at least one part component (14, 15) per mould cavity is injected ;
- mouldings (12a) forming a closure of the receptacles (16) in form of a hole are removed to the exterior;
- the mould cavities are rotated until the receptacles are situated on an axis;
- the insert (17) in form of a rod is slipped along the common axis into the receptacles ;
- the insert is injected with a new part component.

## Revendications

1. Outil de moulage pour fabriquer plusieurs pièces montées par moulage par injection ; une cavité de moulage (11) étant prévue à chaque fois pour les différentes pièces , lequel présente des pièces moulées (12, 12a) pour former des géométries de moulage appartenant à différents états de fabrication des pièces montées (13) ; des réceptions (16) étant formées pour un insert (17) reliant les pièces montées (13) à un ensemble de construction (18) par au moins une géométrie de moulage des cavités de moulage (11) ; lesdites cavités de moulage (11) étant montées de manière rotative sur ledit insert.

2. Outil de moulage selon la revendication 1 où les réceptions (16) pour l'insert (17) sont situées sur un axe et formées de telle sorte que l'insert puisse être inséré le long de cet axe dans la réception.

3. Outil de moulage selon la revendication 2, où les réceptions (16) sont constitués de trous dans lesquels on peut introduire un insert (17) en forme de tige.

4. Outil de moulage selon une des revendications précédentes où cette cavité de moulage (11) suffisant est destiné à fabriquer en même temps au moins deux groupes de construction et est situé lui même de manière à pouvoir tourner.

5. Outil de moulage son une des revendications précédentes où les pièces moulées (12, 12a) des cavités de moulage (11) forment chacune un cadre de clapet (14) et ledit cadre de clapet (14) formant ensemble avec les pièces moulées à chaque fois un clapet (15) ; les réceptions (16) étant prévues pour l'insert (17) en forme d'onde dans une partie des pièces moulées de sorte que l'insert traverse la géométrie de moulage prévue, destinée à former le clapet.

6. Procédé pour fabriquer en même temps plusieurs pièces montées par moulage par injection (13) avec un outil de moulage selon une revendication se rapportant à la revendication 3 où les étapes suivantes sont suivies :
- montage de pièces moulées (12, 12a) vers une géométrie de moulage
- injection de la géométrie de moulage réalisées avec un matériau de remplissage, notamment du plastique
- laisser durcir le matériau de remplissage le plus possible
- répéter les étapes réalisées jusqu'à présent au moins une fois pour former d'autres composants de pièces montées (14, 15) ; la géométrie de moulage étant changée et les composants de pièces montées formant une partie de la nouvelle géométrie de moulage respective où avant la formation d'au moins un des composants de pièces montées des différentes pièces montées (13), un insert (17) est introduit dans les réceptions (16) des géométrie de moulage de sorte qu'au moins deux des pièces montées se trouvent reliées l'une à l'autre par le moulage par injection de l'insert avec le nouveau composant de pièce montée.
- au moins un composant de pièce montée (14, 15) est moulé par cavité de moulage,
- les pièces moulées formant l'un des couvercles des réceptions (16) en forme de trou étant retirées vers l'extérieur,
- tourner les cavités de moulage jusqu'à ce que les réceptions (16) se situent sur un axe,
- pousser l'insert (17) en forme de tige le long de l'axe commun dans les réceptions,
- mouler par injection l'insert avec un nouveau composant de pièce montée.
